(19) Europäisches Patentamt
European Patent Office
Office européen des brevets

(11) EP 3 342 289 B1

(12) **EUROPEAN PATENT SPECIFICATION**

(45) Date of publication and mention of the grant of the patent:
**13.05.2020 Bulletin 2020/20**

(51) Int Cl.:
***A01N 43/707*** *(2006.01)* ***A01N 47/20*** *(2006.01)*
***A01P 13/02*** *(2006.01)*

(21) Application number: **17210153.7**

(22) Date of filing: **22.12.2017**

(54) **HERBICIDAL COMPOSITION AND WEED CONTROL METHOD**

HERBIZIDZUSAMMENSETZUNG UND VERFAHREN ZUR UNKRAUTBEKÄMPFUNG

COMPOSITION HERBICIDE ET PROCÉDÉ DE LUTTE CONTRE LES MAUVAISES HERBES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2016 IN 201631044687**

(43) Date of publication of application:
**04.07.2018 Bulletin 2018/27**

(73) Proprietor: **UPL Limited**
**Haldia, West Bengal 721 602 (IN)**

(72) Inventors:
- **SHROFF, Jaidev Rajnikant**
**Dubai, (AE)**
- **SHROFF, Vikram Rajnikant**
**Dubai, (AE)**
- **KIEVIT, Tony**
**4818 CP Breda (NL)**

(74) Representative: **HGF Limited**
**Saviour House**
**9 St. Saviourgate**
**York YO1 8NQ (GB)**

(56) References cited:
**CA-A1- 2 965 466**

- **ELLIOTT R A ET AL: "The control of annual weeds pre-emergence in sugar beet, with a mixture of propham, chlorpropham fenuron and metamitron, 1977-1980", CONFERENCE INFO: PROCEEDINGS - BRITISH CROP PROTECTION CONFERENCE--WEEDS,, vol. 15, 1 January 1980 (1980-01-01), pages 523-530, XP009503512, ISSN: 0144-1604**
- **JONAS APER ET AL: "Absorption, translocation and metabolism of metamitron in Chenopodium album", PEST MANAGEMENT SCIENCE, vol. 68, no. 2, 28 July 2011 (2011-07-28), pages 209-216, XP055451630, BOGNOR REGIS; GB ISSN: 1526-498X, DOI: 10.1002/ps.2246**
- **G. W. BOURDÔT ET AL: "Evaluation of pre-emergence and post-emergence herbicides in fodder beet and sugar beet in Canterbury", NEW ZEALAND JOURNAL OF EXPERIMENTAL AGRICULTURE, vol. 13, no. 3, 1 July 1985 (1985-07-01), pages 277-283, XP055451689, ISSN: 0301-5521, DOI: 10.1080/03015521.1985.10426094**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD:

The present invention relates to a method of controlling weeds. More specifically, the present invention relates to a method of synergistically controlling *Chenopodium album* using a combination of herbicides.

### BACKGROUNDS AND PRIOR ART:

Weed control has traditionally been carried out by various methods such as spraying herbicides, hand weeding, tillage, animal grazing, crop rotation etc. Weed control methods may also depend on pre-emergent and post emergent control of weeds. Pre-emergent weed control involves application of herbicides early in the growing season, whereas, post-emergent weed control involves application of herbicide later when weeds have already emerged. There are few herbicides that control both pre and post emergent weeds. Selection of the correct herbicide is also important, as it could lead to resistance or minimal to no control of the weeds, or could also lead to phytotoxicity to the crops, resulting in loss of crops among other major disadvantages. Using a combination of herbicides is one of the methods used to prevent weeds becoming resistant to herbicides. Another major advantage of using combination of herbicides is a broader spectrum of control as well as at times, a synergistic effect that controls hard to control weeds.

*Chenopodium album* L. is an annual weed which grows throughout the world. Commonly known as Lamb's-quarters or fat-hen, it is one of five most widely distributed plants in the world. The plant is a very successful colonizer of disturbed soil and a serious weed in cultivated crops such as sugar beets, corn, soybeans, potato and cereal crops. It is known to be a competitive weed that is known to cause crop losses in crops such as corn, soybean and up to almost 48% crop loss in sugar beet.

*Chenopodium album* L. grows to about 2.5 metres in height and has varied morphological features. Larger C. album plants produce a large number of seeds, some of which remain dormant in winter, but bloom in spring. The seeds do not require any special soil to bloom, and can be found growing in almost any soil type except desert soil. The plant is often found in uniform patches with thick growth around the mother plant. If not controlled, the weed can very quickly become troublesome and competitive in the crop. Apart from the competition that it offers the crop, it can be poisonous to some livestock if consumed in large quantities. The pollen is also known to cause hay fever among other allergies. The wide distribution and competitive nature of the weed makes it an important weed that, if left unchecked can lead to major crop loss as well as loss of nutrients to the soil. The seed is also found as impurities in crop seeds.

*Chenopodium album* is responsible for important economic losses in agriculture around the world. Among the weeds implicated with the losses attributed to weeds, *Chenopodium album* has been classified as one of the world's worst. Its worldwide distribution, its ability to colonise new habitats and produce large quantities of seeds with viability extended over several years, its allelopathic potential, as well as the evolution of herbicide resistant biotypes have made *Chenopodium album* a major weed problem in agriculture.

*Chenopodium album* reduces crop yield by direct competition for light and nutrients. In field and greenhouse experiments, important losses due to *Chenopodium album* have been reported on many crops including maize, soyabeans, tomato, oat, barley, lucerne, and sugarbeet. At the density of 172 to 300 plants/$m^2$, *Chenopodium album* was reported to cause between 6 and 58% yield loss in maize in field experiments in Canada (Sibuga and Bandeen, 1980; Ngouajio et al., 1999). In Spain, Torner et al. (1995) reported 22.3% maize yield loss in irrigated field experiments when maize was allowed to compete with *Chenopodium album* at equivalent densities. In the USA, 59% maize yield losses were attributed to uncontrolled populations of *Chenopodium album* in field experiments (Dyck and Liebman, 1995). At a density of 1.6 *Chenopodium album* plants/m of soyabean row, Shurtleff and Coble (1985) observed 15% loss of soyabean seed yield in North Carolina, USA. In Iowa, USA, Staniforth and Lovely (1964) observed about 35% soyabean yield losses due to a natural weed population composed mainly of *Chenopodium album.* In tomato, field experiments conducted in the USA using 64 *Chenopodium album* plants/m of row showed 36% losses of marketable fruits (Bhowmik and Reddy, 1988). In oats, C. album interference in field experiments conducted in Canada caused about 60% losses of grain yield when the weed was allowed to compete with the crop for the entire growing season (Lapointe et al., 1985). Losses of 23-36% of barley yield were attributed to C. album competition in the USA (Conn and Thomas, 1987). Under greenhouse conditions in Canada, about 23% reduction of lucerne biomass yield was recorded by Lapointe et al. (1985) as a direct result of C. album competition.

*Chenopodium album* has been selected for resistance to several herbicides including triazines, substituted ureas, bromoxynil and pyrazon (Solymosi et al., 1986; Vencill and Foy, 1988; De Prado et al., 1989; Hagood, 1989; Holt and Lebaron, 1990; Myers and Harvey, 1993; Glenn et al., 1997).

Many herbicides are known to be used to try and control *Chenopodium album* L., however, over use of some herbicide such as atrazine has resulted in resistance. (Characterization of a Triple (Atrazine-Pyrazon-Pyridate) Resistant Biotype of Common Lambsquarters (Chenopodium album L.), Peter Solymosi, Endre Lehoczki, Journal of Plant Physiology 134(6):685-690 August 1989).

EP0296057 (Watson et.al) teach the use of biological agents to control *Chenopodium album* L., however, most of them inhibit the growth of the plant, but do not completely control the spread of the plant. The origin of metamitron resistant Chenopodium album populations in sugar beet., J Aper, Jan De Riek, B De Cauwer, Dirk Reheul, Communications in agricultural and applied biological sciences 77(3):335-42, January 2012 teaches the use of metamitron alone was not successful in the control of *Chenopodium album* in sugar beet as well as suspected resistance to metamitron in some areas in Belgium. With no clear replacement to metamitron that can control the weed, *Chenopodium album* has become a major problem in many crops such as sugar beet, maize, soybean etc.

The control of annual weeds pre-emergence in sugar beet, with a mixture of propham, choloropropham, fenuron and metamitron, Elliot et aL, Conference Info: Proceedings - British Crop Protection Conference - Weeds, vol. 15, January 1980 teaches the use of a PCF/metamitron mixture for excellent weed control of the species Polygonum convolvulus, Polygonum persicaria, Veronica persica and Viola arvensis.

Objects of the invention:

There is therefore a need in the art for an herbicidal combination that can control *Chenopodium album.*

Another object of the invention is to provide a herbicidal combination that prevents the development of resistance in *Chenopodium album.*

Another object of the present invention is to provide a herbicidal combination that effectively controls the *Chenopodium album* weed and thereby preventing further spread of the weed.

Another object of the invention is to provide a herbicidal combination that effectively in low volume controls the *Chenopodium album* weed.

Another object of the present invention is to provide a herbicidal combination that can control the *Chenopodium album* weed both pre and post emergent. The present invention, described hereinafter, achieves at least one, and preferably more than one, of the above mentioned objects of the invention.

## SUMMARY OF THE INVENTION:

Therefore, one aspect of the present invention can provide a method of controlling *Chenopodium album* in a crop plant, said method comprising treating the desired crop plant or the vicinity thereof with a combination comprising metamitron and chlorpropham, wherein metamitron and chlorpropham are the only herbicides used.

Another aspect of the present invention can provide a method of resistance management in controlling *Chenopodium album* in a crop plant, said method comprising treating the desired crop plant or the vicinity thereof with a combination comprising metamitron and chlorpropham, wherein metamitron and chlorpropham are the only herbicides used.

Another aspect of the present invention can provide compositions comprising metamitron and chlorpropham for controlling *Chenopodium album*; the composition does not comprise any further herbicide.

## DETAILED DESCRIPTION OF THE INVENTION:

It has surprisingly been found by the present inventors that *Chenopodium album* can be completely controlled by the combination of metamitron and chlorpropham. More surprisingly, it was found that this combination was merely additive, even antagonistic, for controlling other prominent weeds but acted in a surprisingly synergistic manner in controlling *Chenopodium album.*

It was further found that this synergy between metamitron and chlorpropham was retained even when the combination was administered without X-cite, which is an adjuvant used for enhancing the efficacy of herbicides. Still more surprisingly, it was found that this synergy was prominent even when the combination of metamitron and chlorpropham was administered without phenmedipham. Accordingly, in certain embodiments, the methods of the invention may be carried out in the absence of X-cite and phenmedipham. Furthermore, the composition of the invention may not comprise X-cite and phenmedipham.

Therefore, this distribution of enhanced synergistic activity of a combination comprising metamitron and chlorpropham towards control of *Chenopodium album* vis-a-vis only a moderate control for prominent other weeds was surprising. This degree of synergistic enhancement in efficacy and a clear trend of differentiated selectivity of this combination towards control of *Chenopodium album* was unpredictable and unexpected.

Metamitron, 4-amino-3-methyl-6-phenyl-1,2,4-triazin-5(4*H*)-one, has a structure:

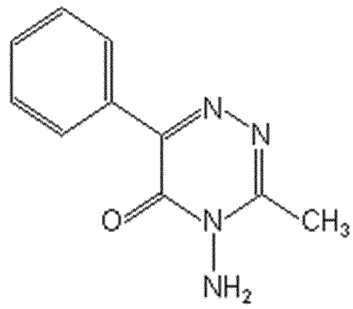

It is a selective herbicide that is absorbed through roots and inhibits photosystem II. It is known to be used for the control of weeds in crops such as sugar beet, fodder beets, red beets etc. as a pre and post emergent herbicide. It is known to control both broad leaf weeds and grasses.

Chlorpropham, 1-methylethyl (3-chlorophenyl)carbamate, has the following structure:

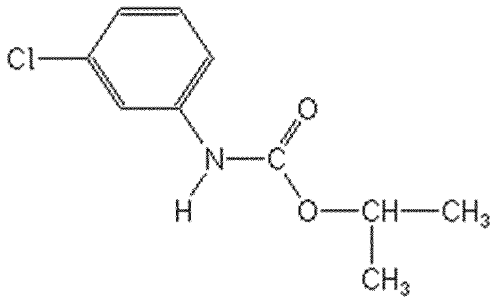

It is a residual herbicide and sprout inhibitor that is used to control weeds in alfalfa, potatoes, sugarbeet, sweet potatoes, tomatoes, garlic, cranberries, blueberries, tobacco etc. Chlorpropham acts on weeds by inhibiting mitosis and is absorbed by roots.

The term 'herbicide' as used herein denotes a compound which controls or modifies the growth of plants. The term 'herbicidally effective amount' indicates the quantity of such a compound or combination of such compounds which is capable of producing a controlling or modifying effect on the growth of plants. Controlling effects include all deviation from natural development, for example: killing, retardation, leaf burn, albinism, dwarfing etc. The term 'plants' refers to all physical parts of a plant, including seeds, seedlings, saplings, roots, tubers, stems, stalks, foliage and fruits. The 'locus' is intended to include soil, seeds, and seedlings as well as established vegetation.

The present invention therefore, in an aspect, can provide a method of controlling *Chenopodium album* at a locus by treating said locus with a combination of metamitron and chlorpropham.

In an embodiment, the method of the present disclosure achieves a superior control of *Chenopodium album* in the absence of X-cite adjuvant.

Therefore, in an embodiment, the present disclosure can provide a method of controlling *Chenopodium album* at a locus by treating said locus with a combination of metamitron and chlorpropham, wherein said combination is administered in the absence of X-cite adjuvant.

In an embodiment, the method of the present invention achieves a superior control of *Chenopodium album* in the absence of phenmedipham, chloridazon or lenacil.

Therefore, in an embodiment, the present invention can provide a method of controlling *Chenopodium album* at a locus by treating said locus with a combination of metamitron and chlorpropham, wherein said combination is administered in the absence of phenmedipham, chloridazon or lenacil.

In an embodiment, the method of the present invention achieves a superior control of *Chenopodium album* in the absence of any further herbicide. Thus, in this embodiment, chlorpropham and metamitron are the only herbicides used in this application.

In an embodiment, the method of the present invention achieves a superior control of *Chenopodium album* in the absence of any further herbicide and in the absence of an adjuvant (optionally X-cite).

Therefore, in an embodiment, the present invention can provide a method of controlling *Chenopodium album* at a locus by treating said locus with a combination of metamitron and chlorpropham, wherein said chlorpropham and metamitron are the only herbicides used in said treatment. Furthermore, in certain embodiments no adjuvants (for example adjuvant X-cite) are used in the method.

In an embodiment, the present invention can provide a method of controlling *Chenopodium album* using a

combination of metamitron and chlorpropham at a ratio of 1:100 to 100:1, preferably the ratio of metamitron to chlorpropham is 1:85 to 85:1, preferably the ratio of metamitron to chlorpropham is 1:25 to 25:1. Optionally, the combination of metamitron and chlorpropham is used at a ratio of 1:1 to 6:1 or 2:1 to 5:1 or 3:1 to 5:1. More preferably, the combination of metamitron and chlorpropham is used at a ratio of 4:1.

In an embodiment, the present invention can provide a method of controlling *Chenopodium album* at a locus by treating said locus with a combination of metamitron and chlorpropham, wherein said metamitron and chlorpropham are used in a ratio of about 4:1.

In an embodiment, the metamitron and chlorpropham herbicides are administered in the form of a composition.

Therefore, in an embodiment, the present invention can provide a method of controlling *Chenopodium album* at a locus by treating said locus with a composition comprising metamitron and chlorpropham.

In an embodiment, composition is a suspo-emulsion composition (SE) comprising 400 g/L metamitron and 100 g/L chlorpropham.

The term "g/L" as used herein denotes the concentration of the respective active ingredient in "grams" present "per litre" of the composition.

Therefore, in an embodiment, the present invention can provide a method of controlling *Chenopodium album* at a locus by treating said locus with a suspoemulsion composition comprising 400 g/L metamitron and 100 g/L chlorpropham.

The rate of application of both metamitron and chlorpropham were both reduced and yet resulted in synergistic control of the weed *Chenopodium album.* Also, the combination achieved a high degree of control of the weed *Chenopodium album* which under normal circumstances is poorly controlled by both metamitron and chlorpropham, when applied alone, both pre and post emergent.

The method of the present invention comprises treating said locus with a composition comprising metamitron and chlorpropham. The composition may be administered to said locus in any manner known to those skilled in the art. For example, the composition may be applied by spraying. The method may therefore further comprise spraying the composition of metamitron and chlorpropham (optionally absent any further herbicide and/or absent any adjuvants (for example X-cite and/or phenmedipham)). The spraying may be carried out at a reduced rate of application compared to rates suggested in the prior art.

In an embodiment, the normal spray rate of the composition of the present invention comprises spraying about 2 L/Ha of the composition, applied three times at approximately 7 days intervals.

In an embodiment, the composition of the present invention comprises about 400 g/L metamitron and 100 g/L chlorpropham such that at this normal rate of application of 2 L/Ha, the composition delivers 800 g/Ha of metamitron and 200 g/Ha of chlorpropham. Therefore, in this embodiment, across the proposed three applications, the composition delivers 2400 g/Ha of metamitron and 600 g/Ha of chlorpropham.

In an embodiment, the spraying may be carried out at a reduced rate of application compared to the normal rate. In an embodiment, under this low dosage application, the composition may deliver about 500 g/Ha of metamitron and 125 g/Ha of chlorpropham, whereas across the proposed 6x application, the combination may deliver 3000 g/Ha metamitron and 750 g/Ha of chlorpropham.

In embodiments the method is a method comprising pre-emergent treatment of *Chenopodium album* at a locus. Alternatively, in embodiments the method is a method comprising post-emergent treatment of *Chenopodium album* at a locus. Furthermore, in embodiments the method is a method comprising pre-emergent treatment of *Chenopodium album* and post-emergent treatment of *Chenopodium album* at a locus.

The synergetic combination of the present invention can be used to control *Chenopodium album* in crops such as sugarbeet, beetroot, fodder beet, potatoes, maize, cereals, soybean, alfalfa, peas, sunflower, wheat, barley, beans, spinach, ornamentals, tree nursery, onions and vegetable crops.

In another aspect, the present invention provides a composition for controlling *Chenopodium album,* said composition comprising metamitron and chlorpropham.

In an embodiment, the composition is a suspo-emulsion composition.

In an embodiment, composition is a suspo-emulsion composition (SE) comprising 400 g/L metamitron and 100 g/L chlorpropham. However, it should be understood that the amount of metamitron and chlorpropham present within the composition of the invention is not particularly limiting and different compositions may be prepared with the desired quantities of metamitron and chlorpropham. For example, suspo-emulsions may be prepared, in a non-limiting embodiment, comprising about 100 - 650 g/L of metamitron and 25 - 200 g/L of chlorpropham.

Therefore, in an embodiment, the present invention can provide a composition for controlling *Chenopodium album* at a locus, said composition being a suspoemulsion composition comprising 400 g/L metamitron and 100 g/L chlorpropham.

The method of the present invention may be carried out by application of a tank-mixture directly to weeds or their locus or can be concentrates or formulations that are normally diluted with additional carriers and excipients before application. Thus, in an embodiment, the composition of the present invention may be formulated as water dispersible

granules, dry flowable granules, wettable powders, or liquids such as emulsifiable concentrates, suspo-emulsions, suspension concentrates, capsule suspensions, ZC formulations etc. In a preferred embodiment, the composition may be a liquid composition. In a preferred embodiment, the preferred liquid composition is a suspo-emulsion.

In embodiments the composition does not comprise an adjuvant. The composition does not comprise any further herbicide. In embodiments the composition does not comprise X-cite and phenmedipham. In embodiments the composition does not comprise any further herbicide and does not comprise X-cite.

In an embodiment the composition is a suspo-emulsion composition (SE) comprising 400 g/L metamitron and 100 g/L chlorpropham provided that the composition does not comprise any further herbicide. In an embodiment the composition is a suspo-emulsion composition (SE) comprising 400 g/L metamitron and 100 g/L chlorpropham provided that the composition does not comprise an adjuvant or a herbicide (optionally X-cite and/or phenmedipham). In an embodiment the composition is a suspo-emulsion composition (SE) comprising 400 g/L metamitron and 100 g/L chlorpropham provided that the composition does not comprise any further herbicide and does not comprise an adjuvant. In an embodiment the composition is a suspo-emulsion composition (SE) comprising 400 g/L metamitron and 100 g/L chlorpropham provided that the composition does not comprise any further herbicide and does not comprise X-cite.

Suitable agricultural excipients and carriers that are useful in preparing the herbicidal mixtures of the invention are well known to those skilled in the art. Some of these excipients include, but are not limited to, crop oil concentrate; emulsified methylated seed oil such as methylated soybean oil, ethoxylated castor oil, rapeseed oil; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; polyoxyethylene sorbitol hexaoleat , phosphated alcohol ethoxylate; natural primary alcohol ($C_{12}$-$C_{16}$) ethoxylate; di-sec-butylphenol EO-PO block copolymer; polysiloxane-methyl cap; nonylphenol ethoxylate, urea ammonium nitrate; tridecyl alcohol ethoxylate; tallow amine ethoxylates.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, N,N-dimethyl alkylamides, dimethyl sulfoxide, liquid fertilizers, latex and the like. Water is generally the carrier of choice for the dilution of concentrates. Suitable solid carriers include KCl, talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, various forms of cellulose, corn cob grit and the like. Other additives commonly used in agricultural compositions include compatibility agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like.

The present compositions can be applied to weeds or their locus by the use of conventional ground or aerial dusters, sprayers, and granule applicators, by addition to irrigation water, and by other conventional means known to those skilled in the art.

The method of control of the present invention may be carried out by spraying the suggested tank mixes, or the individual herbicides may be formulated as a kit-of-parts containing various components that may be mixed as instructed prior to spraying.

In an embodiment the components of the present invention may be packaged such that metamitron and chlorpropham may be packaged separately and then tank mixed before the spraying.

In another embodiment the components of the present invention may be packaged such that metamitron and chlorpropham may be packaged separately, whereas other additives are packaged separately, such that the two maybe tank mixed at the time of spraying.

In another embodiment the components of the present invention may be packaged as composition such that metamitron and chlorpropham are formulated into one composition and other additives are packaged separately, such that the two maybe tank mixed at the time of spraying.

Surprisingly, it has been found by the present inventors, that metamitron and chlorpropham, when applied individually, was ineffective in the control of weeds such as *Stellaria media* and *Lamium purpureum* but demonstrated excellent synergistic control on *Chenopodium album.* The combination controlled the weed both pre and post emergently. As will be demonstrated by the examples, the combination of metamitron and chlorpropham synergistically controlled *Chenopodium album* as compared to other weeds at a particular locus. The current invention therefore provides advantageous methods of controlling *Chenopodium album* both pre and post emergently. The present method also provides a broader spectrum of controlling weeds that helps in resistance management, thus preventing the weed from becoming resistant to either of the herbicides whist providing a broader spectrum of control.

## EXAMPLES:

The following examples demonstrate the present invention:

**Formulation:**

The following suspoemulsion formulation containing chlorpropham and metamitron 100 g/L and 400 g/L was prepared.

| S No. | Ingredients | Amount (g/L) |
|---|---|---|
| 1 | Chlorpropham 99.5% | 100.5 |
| 2 | Metamitron 99.5% | 402.0 |
| 3 | Polyoxyethylene sorbitol hexaoleate | 46.6 |
| 4 | Acrylic copolymer | 34.2 |
| 5 | Vegetable oil solvent | 260.7 |
| 6 | Proxel GXL (1,2-Benzisothiazolin-3-one) | 6.9 |
| 7 | Water | 281.1 |
| | Total | 1132.0 |

23.3 g polyoxyethylene sorbitol hexaoleate, 17.1 g acrylic copolymer and 260.7 g vegetable oil solvent were mixed together in a vessel. To this mixture was added 301.5 g of molten chlorpropham. This mixture was homogenized by stirring for 30 minutes and total volume made upto 1L.

23.3 g polyoxyethylene sorbitol hexaoleate, 17.1 g acrylic polymer and 298.5 g water and metamitron (1206g) were mixed together by high shear stirring. The mixture was micronized to a particle size below 3 micron ($D_{50}$) using a bead mill. A thickening gel was prepared by adding 0.5 g Proxel GXL in 48.5 g water followed by high shear mixing for 2 min. The thickening gel was added to the above milled metamitron mixture. The mixture was homogenized by stirring for 10 min and total volume made upto 1L.

333 mL (=333.3g) was chlorpropham mixture was added to 571.4 mL (= 686.8g) of metamitron pre-mix and homogenized by stirring. To the above mixture was added 0.7g Proxel GXL and the mixture was homogenized by stirring for 2 h. The total volume was made upto 1L.

**Trial 1:**

Field trials were then carried out to evaluate the efficacy of the combination of metamitron and chlorpropham on various weeds in sugar beet. The expected efficacy of a combination of metamitron and chlorpropham was calculated using the well-established Colby method. Any difference between the observed and "expected" efficacy could be attributed to synergy between the two compounds.

In the Colby method, the expected (or predicted) response of a combination of herbicides is calculated by taking the product of the observed response for each individual component of the combination when applied alone divided by 100 and subtracting this value from the sum of the observed response for each component when applied alone. An unexpected enhancement in efficacy of the combination is then determined by comparing the observed response of the combination to the expected (or predicted) response as calculated from the observed response of each individual component alone. If the observed response of the combination is greater than the expected (or predicted) response, or stated conversely, if the difference between the observed and expected response is greater than zero, then the combination is said to be synergistic or unexpectedly effective. (Colby,S. R., Weeds, 1967(15), p. 20-22) The Colby method requires only a single dose of each herbicide applied alone and the mixture of both doses. The formula used to calculate the expected efficacy (EE) which was compared with the observed efficacy (OE) to determine the efficacy of the present invention is explained hereinbelow:

$$EE=(B\ efficacy\ +A\ efficacy-\ (B\ efficacy\ \times\ A\ efficacy)/100)$$

The trial sites had naturally occurring populations of weeds. The weed spectrum included, but was not limited to, Common chickweed (*Stellaria media*, STEME), lambs quarters (*Chenopodium album*, CHEAL), and Red deadnettle (Lamium purpureum, LAMPU). The crops were grown using normal cultural practices for fertilization, seeding, and maintenance. The trials were conducted using normal research methodology. All treatments were applied using a randomized complete block trial design with 4 replications per treatment. Each trial was conducted under GEP guidelines.

Application volumes were varied for each mixture. Such field trials were carried out at various locations so as to generate independent data, the locations were chosen randomly across European nations.

**Table 1:**

| Dose | | % Weed control | | | | | | | |
|---|---|---|---|---|---|---|---|---|---|
| | | Chenopodium album (CHEAL) at 26 DAA | | Chenopodium album (CHEAL) at 36 DAA | | Lamium purpura (LAMPU) at 26 DAA | | Lamium purpura (LAMPU) at 36 DAA | |
| Active | Rate Unit | Expected | Actual | Expected | Actual | Expected | Actual | Expected | Actual |
| Untreated Check | | | 0.0 | | 0.0 | | 0.0 | | 0.0 |
| Metamitron | 1.4 l/ha | | 81.3 | | 75.0 | | 88.0 | | 68.0 |
| Chlorpropham | 0.5 l/ha | | 22.5 | | 21.3 | | 95.0 | | 86.0 |
| Metamitron + Chlorpropham | 2.5 l/ha | 85.5 | 100 | 80.3 | 100 | 99.4 | 98.8 | 95.5 | 94 |
| Observed - Expected efficacy | | 14.5 | | 19.7 | | - 0.6 | | -1.5 | |
| Result | | Synergistic | | Synergistic | | Antagonistic | | Antagonistic | |

**Table 2:**

| Dose | | % Weed control | | | | | | | |
|---|---|---|---|---|---|---|---|---|---|
| | | Chenopodium album (CHEAL) at 45 DAA | | Chenopodium album (CHEAL) at 57 DAA | | Stellaria media (STEME) at 26 DAA | | Stellaria media (STEME) at 36 DAA | |
| Active | Rate Unit | Expected | Actual | Expected | Actual | Expected | Actual | Expected | Actual |
| Untreated Check | | | 0.0 | | 0.0 | | 0.0 | | 0.0 |
| Metamitron | 1.4 l/ha | | 57.5 | | 46.3 | | 89.3 | | 76.3 |
| Chlorpropham | 0.5 l/ha | | 17.5 | | 12.5 | | 63.8 | | 55 |
| Metamitron + Chlorpropham | 2.5 l/ha | 64.9 | 96.8 | 53 | 92.5 | 96 | 100 | 89.3 | 91.5 |
| Observed - Expected efficacy | | 31.8 | | 39.4 | | 4.00 | | 2.1 | |
| Result | | Synergistic | | Synergistic | | Additive | | Additive | |

In the Colby method, the expected (or predicted) response of a combination of herbicides is calculated by taking the product of the observed response for each individual component of the combination when applied alone divided by 100 and subtracting this value from the sum of the observed response for each component when applied alone. An unexpected enhancement in efficacy of the combination is then determined by comparing the observed response of the combination to the expected (or predicted) response as calculated from the observed response of each individual component alone. If the observed response of the combination is greater than the expected (or predicted) response, or stated conversely, if the difference between the observed and expected response is greater than zero, then the combination is said to be synergistic or unexpectedly effective.

Thus, when the combination of the present invention was analysed using this method, it demonstrated an observed - expected value of greater than zero which is indicative of an unexpected efficacy. The basis of demonstration of unexpected efficacy by comparison with the Colby formula is that herbicide (A) tested alone would kill a proportion of the target weeds and leave the remaining portion (a %) as survivors. Similarly, herbicide B tested alone will leave (b %) as survivors. When combined, A+B will, act independently on the target weed (if unexpected activity is absent); component A leaving a% survivors, which survivors will be controlled by component B; which has an overall effect of a%*b%*100. Subsequently, if the percent control is greater than that predicted by the Colby formula or stated conversely, if the difference between the observed control and the expected control is greater than zero; then unexpected enhancement in activity is acknowledged. The degree to which the difference is greater than zero is not itself critical as long as it is greater than zero; however greater the difference, more significant is the enhancement or the unexpectedness in weed control.

Table 1 therefore demonstrates the synergy of the combination when used to control the weed *Chenopodium album,* in comparison, the combination barely showed efficacy in controlling *Lamium purpur.* In Table 2 the degree of efficacy was greater in the control of *Chenopodium album* as compared to the efficacy of control for *Stellaria media.* The difference in the observed vs. expected in the control of *Chenopodium album* clearly demonstrates the unexpected synergistic effect as compared to the effect in the control of *Stellaria media.* No phytotoxicity was observed in any of the field trials. It can therefore be concluded that the combination of metamitron and chlorpropham controls *Chenopodium album* with unexpected synergism as compared to control of other weeds.

**Trial 2:**

Trials were carried out to evaluate the efficacy of metamitron + chlorpropham applied pre-emergence and post-emergence in sugar beet against dominant weeds. The results were tabulated as hereunder:

Table 3:

| Pest code | STEME | | CHEAL | | LAMPU | |
|---|---|---|---|---|---|---|
| Description | Weed control | | Weed control | | Weed control | |
| Days after first/last application | 18/4 | | 18/4 | | 18/4 | |
| Assessment type | Count/$m^2$ | | Count/$m^2$ | | Count/$m^2$ | |
| Metamitron 70 SC @ 1.14 L/Ha | 89.3 | | 81.3 | | 88.0 | |
| Chlorpropham 39.9% w/w @ 0.5 L/Ha | 63.8 | | 22.5 | | 95.0 | |
| Chlorpropham + Metamitron 100 g/L | Calc. | Actual | Calc. | Actual | Calc. | Actual |
| and 400 g/L @ 1 L/Ha | 96.1 | 88.8 | 85.5 | 100.0 | 99.4 | 97.5 |
| Effect seen | Antagonistic | | Synergistic | | Additive | |

Table 4:

| Pest code | STEME | CHEAL | LAMPU |
|---|---|---|---|
| Description | Weed control | Weed control | Weed control |
| Days after first/last application | 28/7 | 28/7 | 28/7 |
| Assessment type | Count/$m^2$ | Count/$m^2$ | Count/$m^2$ |
| Metamitron 70 SC @ 1.14 L/Ha | 76.3 | 75.0 | 68.8 |

(continued)

| Pest code | STEME | | CHEAL | | LAMPU | |
|---|---|---|---|---|---|---|
| Chlorpropham 39.9% w/w @ 0.5 L/Ha | 55.0 | | 21.3 | | 86.0 | |
| Chlorpropham + Metamitron 100 g/L and 400 g/L @ 1 L/Ha | Calc. | Actual | Calc. | Actual | Calc. | Actual |
| | 89.3 | 73.8 | 80.3 | 100.0 | 95.6 | 92.5 |
| Effect seen | Antagonistic | | Synergistic | | Antagonistic | |

Table 5:

| Pest code | STEME | | CHEAL | | LAMPU | |
|---|---|---|---|---|---|---|
| Description | Weed control | | Weed control | | Weed control | |
| Days after first/last application | 37/9 | | 37/9 | | 37/9 | |
| Assessment type | Count/$m^2$ | | Count/$m^2$ | | Count/$m^2$ | |
| Metamitron 70 SC @ 1.14 L/Ha | 61.3 | | 57.5 | | 38.8 | |
| Chlorpropham 39.9% w/w @ 0.5 L/Ha | 40.0 | | 17.5 | | 91.0 | |
| Chlorpropham + Metamitron 100 g/L and 400 g/L @ 1 L/Ha | Calc. | Actual | Calc. | Actual | Calc. | Actual |
| | 76.8 | 66.3 | 64.9 | 96.8 | 94.5 | 93.0 |
| Effect seen | Antagonistic | | Synergistic | | Additive | |

Table 6:

| Pest code | STEME | | CHEAL | | LAMPU | |
|---|---|---|---|---|---|---|
| Description | Weed control | | Weed control | | Weed control | |
| Days after first/last application | 49/21 | | 49/21 | | 49/21 | |
| Assessment type | Count/$m^2$ | | Count/$m^2$ | | Count/$m^2$ | |
| Metamitron 70 SC @ 1.14 L/Ha | 53.8 | | 46.3 | | 16.3 | |
| Chlorpropham 39.9% w/w @ 0.5 L/Ha | 28.8 | | 12.5 | | 91.8 | |
| Chlorpropham + Metamitron 100 g/L and 400 g/L @ 1 L/Ha | Calc. | Actual | Calc. | Actual | Calc. | Actual |
| | 67.1 | 57.5 | 53.0 | 92.5 | 93.1 | 91.3 |
| Effect seen | Antagonistic | | Synergistic | | Antagonistic | |

Thus, it was found that the combination of the present invention was surprisingly synergistic for the control of Chenopodium album, while it was markedly antagonistic for the control of Stellaria media and Lamium amplexicaule.

**Trial 3:**

Trials were carried out to determine whether the efficacy from 400 g/L metamitron and 100 g/L chlorpropham combination was statistically significantly greater than if the two active ingredients were used individually together. This mixture was used for both pre-emergence and post-emergence application. Applications of 2L/Ha were made 3x times, at approximately 7 days apart. In the trials presented below, almost all of applications started at pre-emergence. The second application was also pre-emergence and the third application was generally post-emergence of the crop and/or weed.

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 1 | Assessment type | Percentage control | Percentage control | Percentage control | | |
| 2 | Untreated assessment type | Count/$m^2$ | Count/$m^2$ | Count/$m^2$ | | |
| 3 | Chenopodium album @ 14/4 days after first/last application | 3 | 13 | Calc<br>15.6 | Actual<br>100 | Synergistic |
| 4 | Chenopodium album @ 14/4 days after first/last application - Repeat | 33 | 40 | Calc<br>59.8 | Actual<br>94.0 | Synergistic |
| 5 | Chenopodium album @ 18/4 days after first/last application | 81 | 23 | Calc<br>85.4 | Actual<br>100 | Synergistic |
| 6 | Chenopodium album @ 14/3 days after first/last application | 23 | 28 | Calc<br>44.6 | Actual<br>96 | Synergistic |
| 7 | Chenopodium album @ 15/5 days after first/last application | 75 | 0 | Calc<br>75 | Actual<br>100 | Synergistic |
| 8 | Chenopodium album @ 14/5 days after first/last application | 33 | 15 | Calc<br>43.1 | Actual<br>98 | Synergistic |
| 9 | Chenopodium album @ 21/3 days after first/last application | 75 | 68 | Calc<br>92 | Actual<br>100 | Synergistic |
| 10 | Chenopodium album @ 11/5 days after first/last application | 28 | 42 | Calc<br>58.2 | Actual<br>81 | Synergistic |
| 11 | Chenopodium album @ 26/5 days after first/last application | 40 | 25 | Calc<br>55 | Actual<br>96 | Synergistic |
| 12 | Chenopodium album @ 11/5 days after first/last application | 34 | 24 | Calc<br>49.8 | Actual<br>68 | Synergistic |
| 13 | Chenopodium album @ 26/5 days after first/last application | 33 | 15 | Calc<br>43.1 | Actual<br>94 | Synergistic |
| 14 | Chenopodium album @ 24/4 days after first/last application | 10 | 3 | Calc<br>12.7 | Actual<br>100 | Synergistic |
| 15 | Chenopodium album @ 26/6 days after first/last application | 15 | 23 | Calc<br>34.6 | Actual<br>93 | Synergistic |
| 16 | Chenopodium album @ 23/7 days after first/last application | 83 | 66 | Calc<br>94.2 | Actual<br>99 | Synergistic |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 17 | Chenopodium album @ 20/7 days after first/last application | 88 | 38 | Calc | Actual | Synergistic |
| | | | | 92.5 | 100 | |
| 18 | Chenopodium album @ 28/7 days after first/last application | 75 | 21 | Calc | Actual | Synergistic |
| | | | | 80.3 | 100 | |
| 19 | Chenopodium album @ 48/17 days after first/last application | 82 | 30 | Calc | Actual | Synergistic |
| | | | | 87.4 | 96 | |
| 20 | Chenopodium album @ 30/7 days after first/last application | 89 | 24 | Calc | Actual | Synergistic |
| | | | | 91.6 | 96.0 | |
| 21 | Chenopodium album @ 30/7 days after first/last application | 3 | 25 | Calc | Actual | Synergistic |
| | | | | 27.3 | 49 | |
| 22 | Chenopodium album @ 21/1 days after first/last application | 32 | 35 | Calc | Actual | Synergistic |
| | | | | 55.8 | 90 | |
| 23 | Chenopodium album @ 34/10 days after first/last application | 10 | 5 | Calc | Actual | Synergistic |
| | | | | 14.5 | 100 | |
| 24 | Chenopodium album @ 41/10 days after first/last application | 79 | 62 | Calc | Actual | Synergistic |
| | | | | 92.0 | 97 | |
| 25 | Chenopodium album @ 29/8 days after first/last application | 24 | 20 | Calc | Actual | Synergistic |
| | | | | 39.2 | 63 | |
| 26 | Chenopodium album @ 35/9 days after first/last application | 38 | 13 | Calc | Actual | Synergistic |
| | | | | 46.1 | 96 | |
| 27 | Chenopodium album @ 37/9 days after first/last application | 58 | 18 | Calc | Actual | Synergistic |
| | | | | 65.6 | 97 | |
| 28 | Chenopodium album @ 34/11 days after first/last application | 51 | 10 | Calc | Actual | Synergistic |
| | | | | 55.9 | 92 | |
| 29 | Chenopodium album @ 31/6 days after first/last application | 63 | 25 | Calc | Actual | Synergistic |
| | | | | 72.3 | 100 | |
| 30 | Chenopodium album @ 20/5 days after first/last application | 41 | 40 | Calc | Actual | Synergistic |
| | | | | 64.6 | 90 | |
| 31 | Chenopodium album @ 42/21 days after first/last application | 19 | 18 | Calc | Actual | Synergistic |
| | | | | 33.6 | 64 | |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 32 | Chenopodium album @ 49/21 days after first/last application | 46 | 13 | Calc | Actual | Synergistic |
| | | | | 53.0 | 93 | |
| 33 | Chenopodium album @ 44/20 days after first/last application | 10 | 5 | Calc | Actual | Synergistic |
| | | | | 14.5 | 100 | |
| 34 | Chenopodium album @ 26/6 days after first/last application | 40 | 39 | Calc | Actual | Synergistic |
| | | | | 63.4 | 94 | |
| 35 | Chenopodium album @ 40/7 days after first/last application | 47 | 31 | Calc | Actual | Synergistic |
| | | | | 63.4 | 100 | |
| 36 | Chenopodium album @ 63/42 days after first/last application | 12 | 28 | Calc | Actual | Synergistic |
| | | | | 36.6 | 48 | |
| 37 | Chenopodium album @ 72/51 days after first/last application | 15 | 23 | Calc | Actual | Synergistic |
| | | | | 34.5 | 43 | |
| 38 | Chenopodium album @ 48/25 days after first/last application | 36 | 0 | Calc | Actual | Synergistic |
| | | | | 36 | 89 | |
| 39 | Galeopsis speciosa @ 19/3 days after first/last application | 51 | 23 | Calc | Actual | Antagonistic |
| | | | | 62.3 | 11 | |
| 40 | Galeopsis speciosa @ 30/7 days after first/last application | 3 | 16 | Calc | Actual | Antagonistic |
| | | | | 18.5 | 0 | |
| 41 | Galeopsis speciosa @ 55/32 days after first/last application | 43 | 22 | Calc | Actual | Antagonistic |
| | | | | 55.5 | 11 | |
| 42 | Galeopsis speciosa @ 76/53 days after first/last application | 65 | 34 | Calc | Actual | Antagonistic |
| | | | | 76.9 | 16 | |
| 43 | Galium aparine @ 14/4 days after first/last application | 35 | 33 | Calc | Actual | Antagonistic |
| | | | | 56.5 | 43 | |
| 44 | Galium aparine @ 14/3 days after first/last application | 23 | 8 | Calc | Actual | Antagonistic |
| | | | | 29.2 | 20 | |
| 45 | Galium aparine @ 15/5 days after first/last application | 100 | 0 | Calc | Actual | Antagonistic |
| | | | | 100 | 40 | |
| 46 | Galium aparine @ 26/5 days after first/last application | 35 | 25 | Calc | Actual | Antagonistic |
| | | | | 51.3 | 33 | |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 47 | Galium aparine @ 26/5 days after first/last application | 80 | 0 | Calc | Actual | Antagonistic |
| | | | | 80 | 40 | |
| 48 | Galium aparine @26/6 days after first/last application | 28 | 10 | Calc | Actual | Antagonistic |
| | | | | 35.2 | 28 | |
| 49 | Galium aparine @ 35/9 days after first/last application | 28 | 8 | Calc | Actual | Antagonistic |
| | | | | 33.8 | 25 | |
| 50 | Lamium amplexicaule @ 23/7 days after first/last application | 91 | 68 | Calc | Actual | Antagonistic |
| | | | | 97.1 | 87 | |
| 51 | Lamium amplexicaule @ 34/11 days after first/last application | 80 | 73 | Calc | Actual | Antagonistic |
| | | | | 94.6 | 76 | |
| 52 | Lamium amplexicaule @ 48/25 days after first/last application | 71 | 65 | Calc | Actual | Antagonistic |
| | | | | 89.9 | 73 | |
| 53 | Matricaria recutita @ 14/4 days after first/last application | 100 | 63 | Calc | Actual | Antagonistic |
| | | | | 100 | 38 | |
| 54 | Matricaria recutita @ 16/3 days after first/last application | 80 | 59 | Calc | Actual | Antagonistic |
| | | | | 91.8 | 53 | |
| 55 | Matricaria recutita @ 19/3 days after first/last application | 46 | 24 | Calc | Actual | Antagonistic |
| | | | | 58.9 | 18 | |
| 56 | Matricaria recutita @ 21/3 days after first/last application | 95 | 75 | Calc | Actual | Antagonistic |
| | | | | 98.75 | 63 | |
| 57 | Matricaria recutita @ 24/4 days after first/last application | 100 | 0 | Calc | Actual | Antagonistic |
| | | | | 100 | 25 | |
| 58 | Matricaria recutita @ 30/7 days after first/last application | 11 | 12 | Calc | Actual | Antagonistic |
| | | | | 21.7 | 2 | |
| 59 | Matricaria recutita @ 34/10 days after first/last application | 100 | 15 | Calc | Actual | Antagonistic |
| | | | | 100 | 63 | |
| 60 | Matricaria recutita @ 41/10 days after first/last application | 76 | 71 | Calc | Actual | Antagonistic |
| | | | | 93 | 53 | |
| 61 | Matricaria recutita @ 29/8 days after first/last application | 83 | 58 | Calc | Actual | Antagonistic |
| | | | | 92.8 | 58 | |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 62 | Matricaria recutita @ 44/20 days after first/last application | 100 | 15 | Calc | Actual | Antagonistic |
| | | | | 100 | 73 | |
| 63 | Matricaria recutita @ 42/21 days after first/last application | 75 | 57 | Calc | Actual | Antagonistic |
| | | | | 89.3 | 50 | |
| 64 | Matricaria recutita @ 63/40 days after first/last application | 33 | 76 | Calc | Actual | Antagonistic |
| | | | | 83.9 | 33 | |
| 65 | Mercurialis annua @ 26/5 days after first/last application | 45 | 20 | Calc | Actual | Antagonistic |
| | | | | 59 | 20 | |
| 66 | Mercurialis annua @ 35/9 days after first/last application | 55 | 43 | Calc | Actual | Antagonistic |
| | | | | 74.4 | 38 | |
| 67 | Mercurialis annua @ 48/22 days after first/last application | 68 | 68 | Calc | Actual | Antagonistic |
| | | | | 89.8 | 60 | |
| 68 | Mercurialis annua @ 69/43 days after first/last application | 60 | 58 | Calc | Actual | Antagonistic |
| | | | | 83.2 | 58 | |
| 69 | Fallopia convolvulus @ 26/5 days after first/last application | 28 | 30 | Calc | Actual | Antagonistic |
| | | | | 49.6 | 30 | |
| 70 | Fallopia convolvulus @ 35/9 days after first/last application | 35 | 58 | Calc | Actual | Antagonistic |
| | | | | 72.7 | 55 | |
| 71 | Fallopia convolvulus @ 42/11 days after first/last application | 95 | 55 | Calc | Actual | Antagonistic |
| | | | | 97.8 | 51 | |
| 72 | Senecio vulgaris @ 16/3 days after first/last application | 73 | 73 | Calc | Actual | Antagonistic |
| | | | | 92.7 | 60 | |
| 73 | Senecio vulgaris @ 31/6 days after first/last application | 100 | 17 | Calc | Actual | Antagonistic |
| | | | | 100 | 71 | |
| 74 | Senecio vulgaris @ 41/10 days after first/last application | 51 | 83 | Calc | Actual | Antagonistic |
| | | | | 91.7 | 58 | |
| 75 | Senecio vulgaris @ 48/17 days after first/last application | 100 | 18 | Calc | Actual | Antagonistic |
| | | | | 100 | 78 | |
| 76 | Senecio vulgaris @ 63/40 days after first/last application | 85 | 58 | Calc | Actual | Antagonistic |
| | | | | 93.7 | 43 | |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 77 | Solanum nigrum @ 20/5 days after first/last application | 22 | 10 | Calc | Actual | Antagonistic |
| | | | | 29.8 | 9 | |
| 78 | Solanum nigrum @ 20/6 days after first/last application | 17 | 10 | Calc | Actual | Antagonistic |
| | | | | 25.3 | 11 | |
| 79 | Solanum nigrum @ 40/7 days after first/last application | 63 | 34 | Calc | Actual | Antagonistic |
| | | | | 75.6 | 34 | |
| 80 | Stellaria media @ 18/4 days after first/last application | 94 | 64 | Calc | Actual | Antagonistic |
| | | | | 97.8 | 84 | |
| 81 | Stellaria media @ 14/3 days after first/last application | 45 | 28 | Calc | Actual | Antagonistic |
| | | | | 60.4 | 40.0 | |
| 82 | Stellaria media @ 6/6 days after first/last application | 50 | 40 | Calc | Actual | Antagonistic |
| | | | | 70 | 38 | |
| 83 | Stellaria media @ 11/5 days after first/last application | 30 | 20 | Calc | Actual | Antagonistic |
| | | | | 44 | 9 | |
| 84 | Stellaria media @ 21/3 days after first/last application | 65 | 25 | Calc | Actual | Antagonistic |
| | | | | 73.4 | 45 | |
| 85 | Stellaria media @ 21/1 days after first/last application | 35 | 29 | Calc | Actual | Antagonistic |
| | | | | 53.9 | 15 | |
| 86 | Stellaria media @ 41/10 days after first/last application | 70 | 51 | Calc | Actual | Antagonistic |
| | | | | 85.3 | 32 | |
| 87 | Stellaria media @ 20/5 days after first/last application | 46 | 53 | Calc | Actual | Antagonistic |
| | | | | 74.6 | 43 | |
| 88 | Stellaria media @ 26/6 days after first/last application | 46 | 56 | Calc | Actual | Antagonistic |
| | | | | 76.2 | 41 | |
| 89 | Stellaria media @ 76/53 days after first/last application | 89 | 70 | Calc | Actual | Antagonistic |
| | | | | 96.7 | 44 | |
| 90 | Thlapsi arvense @ 14/3 days after first/last application | 70 | 15 | Calc | Actual | Antagonistic |
| | | | | 74.5 | 64 | |
| 91 | Thlapsi arvense @ 26/6 days after first/last application | 45 | 10 | Calc | Actual | Antagonistic |
| | | | | 50.5 | 45 | |

(continued)

| S No. | Parameter | Metamitron 70 SC @ 1.14 L/Ha | Chlorpropham 39.9% w/w @ 0.5 L/Ha | Chlorpropham + Metamitron 100 g/L and 400 g/L @ 1 L/Ha | | |
|---|---|---|---|---|---|---|
| 92 | Viola arvensis @ 14/3 days after first/last application | 50 | 25 | Calc | Actual | Antagonistic |
| | | | | 62.5 | 33 | |
| 93 | Viola arvensis @ 26/6 days after first/last application | 35 | 28 | Calc | Actual | Antagonistic |
| | | | | 53.2 | 38 | |
| 94 | Viola arvensis @ 48/25 days after first/last application | 89 | 59 | Calc | Actual | Antagonistic |
| | | | | 95.5 | 68 | |

It was surprisingly found that, of the 12 commonly occurring weeds tested, the combination was found to have a synergistic control only for Chenopodium album, while for the remaining weeds namely, Galeopsis speciose, Gallium aparine, Lamium amplexicaule, Matricaria recutita, Mercurialis annua, Fallopia convolvulus, Senecio vulgaris, Solanum nigrum, Stellaria media, Thlapsi arvense and Viola arvensis, the combination was antagonistic. Thus, this degree of synergistic enhancement in efficacy and a clear trend of differentiated selectivity of this combination towards control of *Chenopodium album* was unpredictable and unexpected.

**Trial 4:**

Another trial was carried out to evaluate the percentage efficacy (control relative to the untreated) for HD007 (combination of the present invention) at a normal rate (1N) of 2L/Ha x 3 applications at approximately 7 days intervals. The weeds evaluated were all significant weeds occurring in sugarbeet in the European countries. The compiled results were then subjected to Colby analysis to determine if there was a benefit of the combination of metamitron and chlorpropham in HD007. In the Colby analysis, the efficacy of HD007 was compared against the efficacy of the combination of the two individual actives applied at the equivalent rates as in HD007. HD007 contained 400 g/L metamitron and 100 g/L chlorpropham, such that that a normal rate of 2L/Ha, the combination delivered 800 g/Ha of metamitron and 200 g/Ha of chlorpropham. Across 3x applications, the combination applied 2400 g/Ha of metamitron and 600 g/Ha of chlorpropham. Under a low dosage application (LDS), the combination delivered 500 g/Ha of metamitron and 125 g/Ha of chlorpropham, whereas across 6x application, the combination delivered 3000 g/Ha metamitron and 750 g/Ha of chlorpropham.

The Colby analysis compared a theoretical efficacy of combining the two active ingredients together with the actual efficacy achieved by HD007 at a normal rate of 2L/Ha at 3x application.

| Weed code | Days after 3x/5x applicati on. | Eq. MTM 3x - 7d @ 800 g/Ha | Eq. CIPC 3x-7d @ 200 g/Ha | (1N) HD007 @ 3x - 7d intervals | | | (LDS) HD007 @ 5x - 5d intervals | | |
|---|---|---|---|---|---|---|---|---|---|
| CODE | DAYS | Actual efficacy | Actual efficacy | Expected efficacy | Actual efficacy | Conclusion | Expected efficacy | Actual efficacy | Conclusion |
| CHEAL | 7/0 | 83.0 | 65.8 | 94.2 | 99.0 | Synergism | 94.2 | 96.3 | Synergism |
| CHEAL | 12/0 | 15.0 | 22.5 | 34.1 | 92.5 | Synergism | 34.1 | 91.3 | Synergism |
| CHEAL | 12/0 | 40.0 | 25.0 | 55.0 | 91.3 | Synergism | 55.0 | 96.0 | Synergism |
| CHEAL | 12/0 | 32.5 | 15.0 | 42.6 | 92.5 | Synergism | 42.6 | 93.8 | Synergism |
| CHEAL | 11/0 | 85.5 | 30.5 | 89.9 | 94.1 | Synergism | 89.9 | 96.2 | Synergism |
| CHEAL | 10/0 | 75.0 | 21.3 | 80.3 | 100 | Synergism | 80.3 | 100.0 | Synergism |
| CHEAL | 18/11 | 51.3 | 10.0 | 56.2 | 89.5 | Synergism | 56.2 | 91.5 | Synergism |
| CHEAL | 14/7 | 89.0 | 24.0 | 91.7 | 92.8 | Synergism | 91.7 | 95.8 | Synergism |
| CHEAL | 14/7 | 3.3 | 25.0 | 27.4 | 48.9 | Synergism | 27.4 | 44.6 | Synergism |
| CHEAL | 20/10 | 10.0 | 5.0 | 14.5 | 97.5 | Synergism | 14.5 | 100.0 | Synergism |
| CHEAL | 21/9 | 37.5 | 12.5 | 45.3 | 91.3 | Synergism | 45.3 | 96.0 | Synergism |
| CHEAL | 19/9 | 57.5 | 17.5 | 64.9 | 91.3 | Synergism | 64.9 | 96.8 | Synergism |
| CHEAL | 20/7 | 59.3 | 61.5 | 84.3 | 86.6 | Synergism | 84.3 | 86.8 | Synergism |
| CHEAL | 30/20 | 10.0 | 5.0 | 14.5 | 99.3 | Synergism | 14.5 | 100.0 | Synergism |
| CHEAL | 31/21 | 46.3 | 12.5 | 53.0 | 85.0 | Synergism | 53.0 | 92.5 | Synergism |
| CHEAL | 32/25 | 36.3 | 0.0 | 36.3 | 81.8 | Synergism | 36.3 | 89.3 | Synergism |
| MATCH | 7/0 | 11.3 | 25.0 | 33.5 | 25.0 | Antagonism | 33.5 | 25.0 | Antagonism |
| MATCH | 14/7 | 0.0 | 12.1 | 12.1 | 1.8 | Antagonism | 12.1 | 12.1 | Antagonism |
| MATCH | 12/5 | 11.3 | 25.0 | 33.5 | 25.0 | Antagonism | 33.5 | 25.0 | Antagonism |
| MATCH | 21/10 | 75.4 | 71.0 | 92.8 | 91.0 | Antagonism | 92.8 | 50.7 | Antagonism |
| MATCH | 39/32 | 75.0 | 50.0 | 87.5 | 75.0 | Antagonism | 87.5 | 50.0 | Antagonism |
| MATCH | 28/21 | 60.3 | 56.9 | 82.9 | 71.4 | Antagonism | 82.9 | 75.4 | Antagonism |
| MATCH | 28/17 | 75.0 | 0.0 | 75.0 | 75.0 | ADDITIVE | 75.0 | 75.0 | ADDITIVE |
| MATCH | 50/40 | 32.5 | 75.8 | 83.7 | 71.7 | Antagonism | 83.7 | 77.5 | Antagonism |

(continued)

| **Weed code** | **Days after 3x/5x applicati on.** | **Eq. MTM 3x - 7d @ 800 g/Ha** | **Eq. CIPC 3x-7d @ 200 g/Ha** | **(1N) HD007 @ 3x - 7d intervals** | | | **(LDS) HD007 @ 5x - 5d intervals** | | |
|---|---|---|---|---|---|---|---|---|---|
| CODE | DAYS | Actual efficacy | Actual efficacy | Expected efficacy | Actual efficacy | Conclusion | Expected efficacy | Actual efficacy | Conclusion |
| MATCH | 60/53 | 100.0 | 70.0 | 100.0 | 100.0 | ADDITIVE | 100.0 | 66.9 | Antagonism |
| POLCO | 55/43 | 0.0 | 97.5 | 97.5 | 97.5 | ADDITIVE | 97.5 | 90.0 | Antagonism |
| STEME | 7/0 | 57.5 | 25.0 | 68.1 | 45.0 | Antagonism | 68.1 | 52.5 | Antagonism |
| STEME | 6/-7 | 45.7 | 55.8 | 76.0 | 45.6 | Antagonism | 76.0 | 45.5 | Antagonism |
| STEME | 15/8 | 50.0 | 50.0 | 75.0 | 50.0 | Antagonism | 75.0 | 50.0 | Antagonism |
| STEME | 39/32 | 75.3 | 66.4 | 91.7 | 87.0 | Antagonism | 91.7 | 67.4 | Antagonism |
| STEME | 46/39 | 49.1 | 2.4 | 50.3 | 24.1 | Antagonism | 50.3 | 15.8 | Antagonism |
| STEME | 28/21 | 25.0 | 25.0 | 43.8 | 25.0 | Antagonism | 43.8 | 25.0 | Antagonism |
| STEME | 60/53 | 74.3 | 70.3 | 92.4 | 86.3 | Antagonism | 92.4 | 43.9 | Antagonism |
| SENVU | 12/5 | 0.0 | 25.0 | 25.0 | 25.0 | ADDITIVE | 25.0 | 25.0 | ADDITIVE |
| SOLNI | 6/-7 | 17.1 | 10.2 | 25.6 | 9.2 | Antagonism | 25.6 | 11.8 | Antagonism |
| VIOAR | 7/0 | 92.5 | 78.8 | 98.4 | 95.8 | Antagonism | 98.4 | 97.3 | Antagonism |
| CAPBP | 18/11 | 96.5 | 76.3 | 99.2 | 97.5 | Antagonism | 99.2 | 98.0 | Antagonism |
| LAMAM | 18/11 | 80.0 | 73.3 | 94.7 | 87.5 | Antagonism | 94.7 | 89.5 | Antagonism |
| MATIN | 18/11 | 98.0 | 26.3 | 98.5 | 98.5 | ADDITIVE | 98.5 | 98.9 | ADDITIVE |
| MERAN | 21/9 | 32.5 | 42.5 | 61.2 | 50.0 | Antagonism | 61.2 | 55.0 | Antagonism |
| SENVU | 21/10 | 51.1 | 83.3 | 91.8 | 91.7 | ADDITIVE | 91.8 | 57.6 | Antagonism |
| VERPE | 18/11 | 86.3 | 74.5 | 96.5 | 89.0 | Antagonism | 96.5 | 96.0 | Antagonism |
| VIOAR | 18/11 | 86.3 | 72.5 | 96.2 | 87.5 | Antagonism | 96.2 | 91.5 | Antagonism |
| GAESP | 39/32 | 43.2 | 22.2 | 55.8 | 16.1 | Antagonism | 55.8 | 10.6 | Antagonism |
| LAMAM | 32/25 | 71.3 | 65.0 | 90.0 | 83.5 | Antagonism | 90.0 | 85.4 | Antagonism |
| MERAN | 34/22 | 55.0 | 67.5 | 85.4 | 67.5 | Antagonism | 85.4 | 77.5 | Antagonism |
| SENVU | 28/17 | 100.0 | 17.8 | 100.0 | 100.0 | ADDITIVE | 100.0 | 88.2 | Antagonism |

(continued)

| Weed code | Days after 3x/5x applicati on. | Eq. MTM 3x - 7d @ 800 g/Ha | Eq. CIPC 3x-7d @ 200 g/Ha | (1N) HD007 @ 3x - 7d intervals | | | (LDS) HD007 @ 5x - 5d intervals | | |
|---|---|---|---|---|---|---|---|---|---|
| CODE | DAYS | Actual efficacy | Actual efficacy | Expected efficacy | Actual efficacy | Conclusion | Expected efficacy | Actual efficacy | Conclusion |
| VERPE | 32/25 | 82.0 | 65.0 | 93.7 | 85.0 | Antagonism | 93.7 | 94.0 | ADDITIVE |
| VIOAR | 32/25 | 80.0 | 58.8 | 91.8 | 77.5 | Antagonism | 91.8 | 84.2 | Antagonism |
| CAPBP | 32/25 | 94.8 | 66.3 | 98.2 | 96.3 | Antagonism | 98.2 | 97.8 | ADDITIVE |
| MERAN | 55/43 | 60.0 | 57.5 | 83.0 | 57.5 | Antagonism | 83.0 | 65.0 | Antagonism |
| SENVU | 47/40 | 44.2 | 58.3 | 76.7 | 74.2 | Antagonism | 76.7 | 42.5 | Antagonism |
| GAESP | 60/53 | 64.8 | 33.6 | 76.6 | 30.1 | Antagonism | 76.6 | 15.6 | Antagonism |
| | | Mean | Mean | Colby efficacy | Mean efficacy | Result | Colby efficacy Mean | Mean actual efficacy | Result |
| TOTAL WEED COUNT | 13/13 | 70.7 | 57.1 | 87.4 | 73.5 | Antagonism | 87.4 | 69.7 | Antagonism |

It was thus surprisingly found that, of the 13 weeds tested, the combination HD007 was found to be antagonistic for all the weeds except Chenopodium album where it was unexpectedly synergistic. It was equally surprising that when all the weeds were counted together, the mean actual efficacy was found to be much lower than the mean Colby efficacy implying that HD007 was antagonistic and/or additive for the total weed count in general. It was thus truly surprising that this combination HD007 was found to be synergistic only in the control of Chenopodium album.

## Claims

1. A method of controlling Chenopodium album at a locus by treating the locus or its vicinity with a combination comprising metamitron and chlorpropham, wherein chlorpropham and metamitron are the only herbicides used.

2. The method as claimed in claim 1, wherein metamitron and chlorpropham is used at a ratio of about 4:1.

3. The method as claimed in any one of the preceding claims, wherein metamitron and chlorpropham are administered in one composition.

4. The method as claimed in claim 3, wherein the composition is a suspo-emulsion composition (SE) comprising metamitron and chlorpropham.

5. The method as claimed in claim 4, wherein the suspo-emulsion composition comprises 400 g/L metamitron and 100 g/L chlorpropham.

6. The method as claimed in any one of the preceding claims, wherein Chenopodium album is controlled in crops selected from sugarbeet, fodder beet, potatoes, maize, cereals, soybean, alfalfa and vegetable crops.

7. A composition for controlling Chenopodium album, said composition comprising metamitron and chlorpropham wherein chlorpropham and metamitron are the only herbicides used.

8. The composition as claimed in claim 7, wherein the composition is a suspo-emulsion composition comprising 400 g/L metamitron and 100 g/L chlorpropham.

9. The composition as claimed in claim 7 or claim 8, wherein the composition additionally comprises surfactant, adjuvant, carrier, thickener, biocide or antifoam agent.

10. The composition as claimed in claims 7-9, wherein the composition additionally comprises polyoxyethylene sorbitol hexaoleate, acrylic copolymer, vegetable oil solvent, a biocide or optionally water.

## Patentansprüche

1. Verfahren zum Bekämpfen von Chenopodium album an einem Ort durch Behandeln des Orts oder seiner Umgebung mit einer Kombination, umfassend Metamitron und Chlorpropham, wobei Chlorpropham und Metamitron die einzigen verwendeten Herbizide sind.

2. Verfahren nach Anspruch 1, wobei Metamitron und Chlorpropham in einem Verhältnis von etwa 4: 1 verwendet werden.

3. Verfahren nach einem der vorherigen Ansprüche, wobei Metamitron und Chlorpropham in einer Zusammensetzung verabreicht werden.

4. Verfahren nach Anspruch 3, wobei die Zusammensetzung eine Suspension-Emulsion-Zusammensetzung (SE) ist, umfassend Metamitron und Chlorpropham.

5. Verfahren nach Anspruch 4, wobei die Suspension-Emulsion-Zusammensetzung 400 g/l Metamitron und 100 g/l Chlorpropham umfasst.

6. Verfahren nach einem der vorhergehenden Ansprüche, wobei Chenopodium album in Kulturen bekämpft wird, die

ausgewählt sind aus Zuckerrüben, Futterrüben, Kartoffeln, Mais, Getreide, Sojabohnen, Alfalfa und Gemüsekulturen.

**7.** Zusammensetzung zum Bekämpfen von Chenopodium album, die Zusammensetzung umfassend Metamitron und Chlorpropham, wobei Chlorpropham und Metamitron die einzigen verwendeten Herbizide sind.

**8.** Zusammensetzung nach Anspruch 7, wobei die Zusammensetzung eine Suspension-Emulsion-Zusammensetzung ist, die 400 g/l Metamitron und 100 g/l Chlorpropham umfasst.

**9.** Zusammensetzung nach Anspruch 7 oder Anspruch 8, wobei die Zusammensetzung zusätzlich Tensid, Adjuvans, Träger, Verdickungsmittel, Biozid oder Schaumverhinderungsmittel umfasst.

**10.** Zusammensetzung nach Anspruch 7-9, wobei die Zusammensetzung zusätzlich Polyoxyethylensorbithexaoleat, Acrylcopolymer, Pflanzenöllösungsmittel, ein Biozid oder optional Wasser umfasst.

## Revendications

**1.** Procédé de contrôle de Chenopodium album au niveau d'un locus en traitant le locus ou ses environs avec une combinaison comprenant du métamitrone et du chlorprophame, dans lequel le chlorprophame et le métamitrone sont les seuls herbicides utilisés.

**2.** Procédé selon la revendication 1, dans lequel le métamitrone et le chlorprophame sont utilisés selon un rapport d'environ 4/1.

**3.** Procédé selon l'une quelconque des revendications précédentes, dans lequel le métamitrone et le chlorprophame sont administrés dans une composition.

**4.** Procédé selon la revendication 3, dans lequel la composition est une composition de suspo-émulsion (SE) comprenant du métamitrone et du chlorprophame.

**5.** Procédé selon la revendication 4, dans lequel la composition de suspo-émulsion comprend 400 g/L de métamitrone et 100 g/L de chlorprophame.

**6.** Procédé selon l'une quelconque des revendications précédentes, dans lequel Chenopodium album est contrôlé dans des cultures choisies parmi la betterave à sucre, la betterave fourragère, les pommes de terre, le maïs, les céréales, le soja, la luzerne et les cultures maraîchères.

**7.** Composition destinée à contrôler Chenopodium album, ladite composition comprenant du métamitrone et du chlorprophame dans laquelle le chlorprophame et le métamitrone sont les seuls herbicides utilisés.

**8.** Procédé selon la revendication 7, dans lequel la composition est une composition de suspo-émulsion comprenant 400 g/L de métamitrone et 100 g/L de chlorprophame.

**9.** Composition selon la revendication 7 ou la revendication 8, dans laquelle la composition comprend en plus un tensioactif, un adjuvant, un support, un épaississant, un biocide ou un agent antimousse.

**10.** Composition selon les revendications 7 à 9, dans laquelle la composition comprend en outre de l'hexaoléate de sorbitol polyoxyéthylène, un copolymère acrylique, un solvant à l'huile végétale, un biocide ou facultativement de l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0296057 A, Watson


### Non-patent literature cited in the description


- **PETER SOLYMOSI ; ENDRE LEHOCZKI.** Characterization of a Triple (Atrazine-Pyrazon-Pyridate) Resistant Biotype of Common Lambsquarters (Chenopodium album L.). *Journal of Plant Physiology,* August 1989, vol. 134 (6), 685-690
- **J APER ; JAN DE RIEK ; B DE CAUWER ; DIRK REHEUL.** The origin of metamitron resistant Chenopodium album populations in sugar beet. *Communications in agricultural and applied biological sciences,* January 2012, vol. 77 (3), 335-42
- **ELLIOT et al.** *Conference Info: Proceedings - British Crop Protection Conference - Weeds,* January 1980, vol. 15
- **COLBY,S. R.** *Weeds,* 1967, vol. 15, 20-22